# EUROPEAN PATENT APPLICATION

(11) **EP 4 517 637 A1**
(43) Date of publication of application: **05.03.2025**
(21) Application number: 23020412.5
(22) Date of filing: 31.08.2023
(51) Int. Cl.: G06Q 40/08

(54) **COMPUTERIZED METHOD AND SYSTEM FOR INFORMATION HANDLING**

(71) Applicant: Man, Arina, 6300 Zug (CH)
(72) Inventor: Man, Arina, 6300 Zug (CH)

(57) **Abstract**

The present invention provides a system and method for predictive underwriting and marketing of insurance products using historical data, risk maps, and external data sources. The method and system generate a prediction model that maps the identified parameters. The prediction model is used to identify spatially separated groups of drivers with uniform policy performance. The method and system present external questions to the driver who wishes to purchase the insurance product, and the driver's answers are used to predict the driver's level of belonging to one of the recognized groups.

## Description

### TECHNICAL FIELD

The present invention relates to insurance underwriting and marketing of insurance products, more particularly, computerized method and system for information handling to evaluating an insurance risk level for a vehicle insurance and classifying the applicant based on intellectual database.

### BACKGROUND OF THE INVENTION

The insurance industry has been undergoing a digital transformation in recent years, with more companies turning to automated underwriting systems to offer more accurate and efficient services to their customers. One challenge that insurers face is the need to ask potential policyholders a large number of questions to accurately assess their risk profile and offer the most suitable insurance package. This can lead to a cumbersome and time-consuming process that can deter customers from completing the purchase. To address this challenge, insurers are seeking ways to streamline the underwriting process and offer potential policyholders a more efficient and pleasant experience.

In the past, insurance companies have attempted to streamline the underwriting process by reducing the number of questions asked or by using simplified questionnaires. However, these attempts often resulted in less accurate assessments of risk and less effective matching of policyholders to appropriate insurance packages. Additionally, some companies have attempted to use demographic data or credit scores as a shortcut to assess risk, but these methods have been criticized for their potential to introduce bias and discrimination.

Another challenge is the need to access and analyze large amounts of data from multiple sources to accurately assess risk. This requires sophisticated data analytics tools and expertise, which may be lacking in some insurance companies. Additionally, the complexity of the underwriting process can make it difficult to communicate the reasoning behind the questions asked, leading to confusion and frustration for potential policyholders.

The listed features of the prior art substantially described in application US2007226014A1 "System and method of classifying vehicle insurance applicants". Applicant discloses a method of evaluating insurance risk of a vehicle insurance applicant which provides identifying a plurality of temporal identifiers related to acquired driving experience for the applicant, where the temporal identifiers include valid license duration, license elements duration, credit duration, no-need no-prior submission, learner permit duration, no license violation duration; and assigning a value to each of the identified temporal identifiers. The method includes identifying a plurality of exception identifiers related to a driving record of the applicant, where the exception identifiers include evidence of prior valid license, evidence of prior violations, evidence of accident record, and evidence of prior vehicle insurance; and assigning a value to each of the identified exception identifiers. The method includes calculating a driver rating based upon the value assigned to each of the temporal and exception identifiers, and classifying the applicant into categories of inexperienced adult driver, unverifiable driving history, or an inexperienced driver.

US11144997B2 describes system and method for expediting purchase of vehicular insurance using a mobile application for purchasing vehicular insurance without the need for manual data entry via a mobile device keyboard is disclosed. The mobile application is configured to image driver's licenses and vehicle barcodes to collect relevant driver and vehicular information. Other relevant data is either collected from correlated third-party databases or user input via voice recognition or user-friendly graphical user interface screens. Collected information is transmitted to one or more insurers and one or more quotes are displayed for consideration by the applicant. The mobile application may further comprise payment services and insurance agency point of sale services. The mobile application further provides an interactive digital insurance identification card to serve as a platform and dashboard for readily accessing services associated with the insurance policy.

US8577703B2 describes system and method for categorizing driving behavior using driver mentoring and/or monitoring equipment to determine an underwriting risk. The system and method are applied for monitoring and mentoring driver behavior and vehicle operation and for categorizing or grading a driver's performance. The driver's classification or grade is used to determine or adjust insurance rates, premiums or coverages for the driver. The driver may receive discounted insurance rates for using monitoring and/or mentoring equipment in the vehicle. Insurance companies may use the driver classifications or grades to bid for coverage of groups of drivers having similar classifications or grades.

The prior art shows some disadvantages of the known systems including a limited approach to each applicant and a large amount of individual data that requires separate evaluation for decision-making.

Based on the prior art we can see that overall, the insurance industry has recognized the need to improve the underwriting process to provide a better customer experience and reduce costs. However, finding a solution that balances accuracy, efficiency, and transparency remains a challenge.

The result of the presented invention is providing an effective system and method for predictive underwriting and marketing of insurance products based on intellectual information database handling by computerized method and system. The claimed invention allows processing of large data sets with the formation of an organized output.

Further areas of applicability of the present disclosure will become apparent from the detailed description, the claims and the drawings. The detailed description and specific examples are intended for purposes of illustration only and are not intended to limit the scope of the disclosure.

### SUMMARY OF THE INVENTION

One aspect of the present invention provides a computerized method for information handling related to insurance underwriting and marketing of insurance products.

The method includes actions of obtaining and using a historical data on issued insurance driver's policies, obtaining and using an environmental data and combining the data into the dataset. The method includes identifying the parameters that affect the policy selection. The next step is analyzing the parameters that were selected and creating a prediction function using machine learning. The prediction function substantially mapping the parameters into an N-dimensional space that includes the policy selection and reducing the N-dimensional space to low-dimensional space is carried out. The method includes selecting groups of drivers that are geometrically close to each other in low-dimensional space and identifying which parameters are dominant in this group is carried out. Based on the identified parameters generating questions that connect a single policyholder to a specific group and using generated questions to predict the driver's level of belonging to one of the specific groups is carried out. The environmental data may comprise at least a demographic data, a telematic data, a weather data, a financial data and a combinations of data types.

Another aspect of the present invention provides a computer-readable medium for information handling. Wherein the computer-readable medium including program instructions for performing the steps of:
- obtaining and using a historical data on issued insurance policies;
- obtaining and using an environmental data;
- combining the data into one dataset;
- identifying the parameters that affect the policy selection the most using algorithms;
- analyzing the parameters that were selected and creating a prediction function using machine learning;
- mapping the parameters into an N-dimensional space that includes the policy selection;
- reducing the N-dimensional space to low-dimensional space;
- selecting the groups of drivers that are geometrically close to each other in low-dimensional space;
- identifying which parameters are dominant in this group;
- generating questions that connect a single policyholder to a specific group;
- using generated questions to predict the driver's level of belonging to one of the specific groups.

Another aspect of the present invention provides a system for information handling, comprising:
- means for using a historical data on issued insurance driver's policies;
- means for using an environmental data;
- means for combining the data into one dataset;
- means for identifying the parameters that affect the policy selection the most using algorithms;
- means for analyzing the parameters that were selected and creating a prediction function using;
- machine learning means for mapping the parameters into an N-dimensional space that includes the policy selection;
- means for reducing the N-dimensional space to low-dimensional space;
- means for selecting the groups of drivers that are geometrically close to each other in low-dimensional space;
- means for identifying which parameters are dominant in this group;
- means for generating questions that connect a single policyholder to a specific group;
- means for predict the driver's level of belonging to one of the specific groups.

Means for using the environmental data may comprising at least:
- means for using demographic data;
- means for using telematic data;
- means for using weather data;
   means for using financial data;
   means for using combinations of data types.

### BRIEF DESCRIPTION OF THE DRAWINGS

Embodiments of the invention are better understood with reference to the following drawings. The elements of the drawings are not necessarily to scale relative to each other. Like reference numerals designate corresponding similar parts.
FIG. 1 illustrates a flow diagram of a computerized method for information handling according to one embodiment of the present invention.
FIG. 2 illustrates an additional dataset structure of a computerized method for information handling according to one embodiment of the present invention.
FIG. 3 illustrates a network architecture diagram of a system for information handling.

### DETAILED DESCRIPTION OF THE INVENTION

In the following Detailed Description, reference is made to the accompanying drawing, which form a part hereof, and in which is shown by way of illustration specific embodiments of the invention. The following detailed description, therefore, is not to be taken in a limiting sense, and the scope of the present invention is defined by the appended claims.

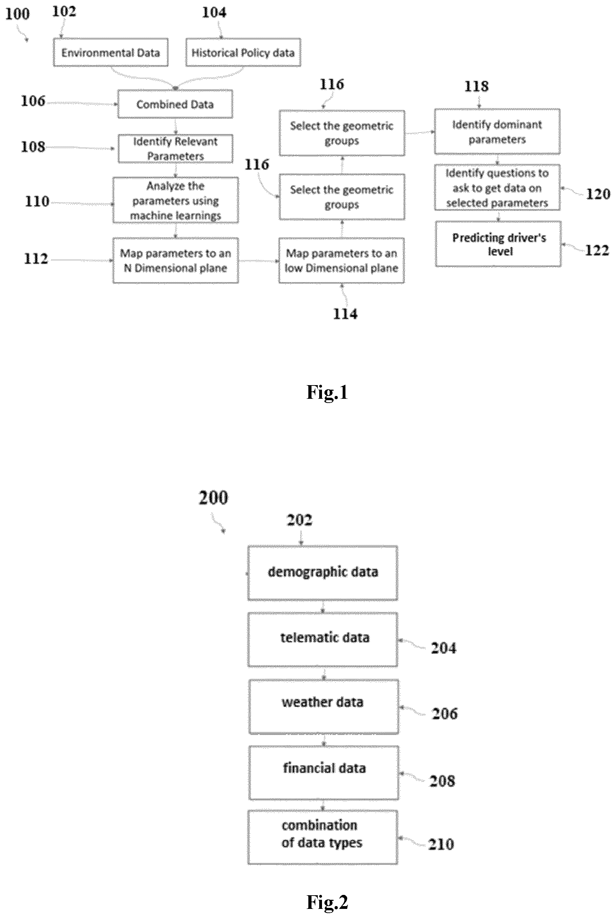

FIG. 1 illustrates a flow diagram of a computerized method for information handling according to one embodiment of the present invention.

The flow diagram in one embodiment illustrates the method which is based on an algorithm 100 that provides using an environmental data 102 and historical insurance driver's policies data 104. The algorithm 100 provides combining 106 received environmental data 102 and historical insurance driver's policies data 104 into one dataset. Using the combined dataset identifying relevant parameters 108 that affect the policy issuing the most is conducted.

According to preferred embodiment of the invention algorithm 100 provides an analyzing 110 the relevant parameters that were selected and creating a prediction function using machine learning. Wherein mapping 112 the relevant parameters that leads to the policy issuing into an N-dimensional space and reducing 114 the N-dimensional space to a low-dimensional space is conducted. Among of the low-dimensional space relevant parameter selecting 116 geometric groups of drivers that are geometrically close to each other is conducted. At least one geometric group can be selected on the step 116.

Among of the selected geometric group identifying 118 which parameters are dominant of each group. Based on identified dominant parameter identifying and generating 120 questions that connect a single policyholder (driver) to a specific geometric group is conducted. Algorithm 100 provides using generated questions 120 to predict 122 the driver's level of belonging to one of the specific geometric groups.

The environmental data 102 can be based on additional dataset 200 illustrated on Fig. 2. Wherein dataset 200 provides at least a demographic data 202, a telematic data 204, a weather data 206, a financial data 208 and a combination 210 of data types. Such data sets can be measured by measuring means or can be taken and compiled from open sources or particular government databases.

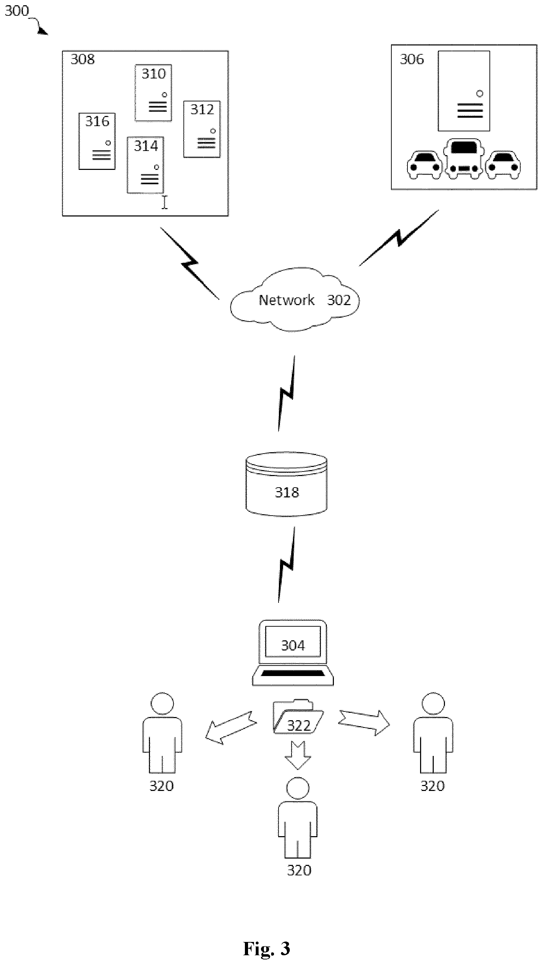

In one embodiment of the invention, the described method can be provided by the system 300 Fig.3 and computer-readable medium with program instructions for information handling. The computer-readable medium with program instructions and algorithms can reside on a cloud network 302 in connection with a user's device, for example computer 304. The computer-readable medium with program instructions provided for performing the steps of:
- Obtaining and using the historical data on issued insurance policies. On this step the system activates means 306 for collecting and using historical data on issued insurance driver's policies. The historical data can be collected as a result of big data analyses taken from open sources or taken from annual servers.
- Obtaining and using the environmental data. Wherein using means 308 for collecting and using the environmental data based on at least a demographic data source 310, a telematic data source 312, a weather data source 314, a financial data source 316 and combinations of the said data types is conducted.
- Combining the collected data into one dataset by special means of the system for combining the data into one dataset which can be based on an additional database server 318.
- Identifying relevant parameters that affect the driver's policy issuing the most. On this step the system activates means for identifying and selecting relevant parameters that affect the policy selection the most by using the algorithm based on the user's device 304. The identified parameters substantially have a significant impact on the performance of each insurance policy.
- Using the system means based on the user's device 304 for analyzing the relevant parameters that were selected and creating a prediction function using machine learning. Wherein mapping the parameters leads to the policy issuing into an N-dimensional space that includes the policy selection.
- Reducing the N-dimensional space to low-dimensional space. On this step the system activates means for reducing the N-dimensional space to low-dimensional space for example that maps the identified parameters to a two-dimensional space.
- Selecting the groups 320 of drivers that are geometrically close to each other in low-dimensional space. Using the means for selecting the groups of drivers the prediction model identifying spatially separated groups of drivers with uniform policy performance.
- Identifying which parameters are dominant in this group. The system analyzes the salient parameters that indicate the belonging of each driver to the group.
- Generating questions that connect a single policyholder to a specific group. On this step the system using the special means 322 generates external questions to the driver who wishes to purchase the insurance product, and the driver's answers are used to predict the driver's level of belonging to one of the recognized groups. If the driver is mapped to a group with a good match for the policy, the underwriting is approved and the policy is offered to the driver.

The present invention allows us to solve the disadvantages of the prior art. The method and system present external questions based on the intellectual database to the driver who wishes to purchase the insurance product, and the driver's answers are used to predict the driver's level. If the driver is mapped to a group with a good match for the policy, the underwriting is approved and the policy is offered to the driver.

Although specific embodiments have been illustrated and described herein, it will be appreciated by those of ordinary skill in the art that a variety of alternate and/or equivalent implementations may be substituted for the specific embodiments shown and described without departing from the scope of the present invention. This application is intended to cover any adaptations or variations of the specific embodiments discussed herein. Therefore, it is intended that this invention be limited only by the claims and the equivalents thereof.

## Claims

1. A computerized method for information handling, comprising:
Obtaining and using a historical data on an issued insurance driver's policies;
Obtaining and using an environmental data;
Combining the historical and the environmental data into a dataset based on computer-readable medium;
Identifying relevant parameters among the dataset that affect the policy issuing the most;
Analyzing the relevant parameters among the dataset that were selected and creating a prediction function using machine learning;
Mapping the relevant parameters that lead to the policy issuing into a N-dimensional space;
Reducing the N-dimensional space to a low-dimensional space;
Selecting groups of drivers which relevant parameters are geometrically close to each other within the low-dimensional space;
Identifying which parameters are dominant of each group;
Generating questions that connect a single random driver to a specific group;
Using the generated questions to predict the random driver's level of belonging to one of the specific groups.

2. The method of claim 1, wherein the environmental data comprising a demographic data, a telematic data, a weather data and/or a financial data.

3. A computerized method for information handling based on a computer-readable medium, wherein the computer-readable medium including program instructions for performing the steps of:
Obtaining and using a historical data on an issued insurance driver's policies;
Obtaining and using an environmental data;
Combining the historical and the environmental data into a dataset;
Identifying relevant parameters among the dataset that affect the policy issuing the most;
Analyzing parameters that were identified and creating a prediction function using machine learning;
Mapping the relevant parameters that lead to the policy issuing into a N-dimensional space;
Reducing the N-dimensional space to a low-dimensional space;
Selecting groups of drivers which relevant parameters are geometrically close to each other within the low-dimensional space;
Identifying which parameters are dominant of each group;
Generating questions that connect a random driver to a specific geometric group;
Using the generated questions to predict the random driver's level of belonging to one of the specific groups.

4. The method of claim 7, wherein the environmental data comprising a demographic data and/or a telematic data and/or a weather data and/or a financial data.

5. A computerized system, comprising:
means for using a historical data on an issued insurance driver's policies;
means for using an environmental data;
means for combining the historical and the environmental data into a dataset;
means for identifying relevant parameters among the dataset that affect the policy issuing the most;
means for analyzing the relevant parameters that were identified and creating a prediction function using machine learning;
means for mapping the parameters into a N-dimensional space that includes the policy;
selection means for reducing the N-dimensional space to a low-dimensional space;
means for selecting the groups of a random drivers which relevant parameters are geometrically close to each other within the low-dimensional space;
means for identifying which parameters are dominant of each group;
means for generating questions that connect the random driver to a specific group;
means for predicting the random driver's level of belonging to one of the specific groups.

6. The system of claim 13 further comprising a means for using a demographic data and/or a means for using a telematic data and/or a means for using a weather data and/or a means for using financial data.
